# EUROPEAN PATENT APPLICATION

(11) **EP 4 197 681 A1**
(43) Date of publication of application: **21.06.2023**
(21) Application number: 21866862.2
(22) Date of filing: 10.09.2021
(51) Int. Cl.: B23K 20/12, B29C 65/06

(54) **FRICTION STIR SPOT WELDING METHOD AND WELDED BODY USING SAME**

(30) Priority: 11.09.2020 JP 2020153148
(71) Applicant: KAWASAKI JUKOGYO KABUSHIKI KAISHA, Kobe-shi, Hyogo 650-8670 (JP)
(72) Inventor: HATANO, Ryoichi, Kobe-shi, Hyogo 650-8670 (JP); KAMIMUKI, Kenichi, Kobe-shi, Hyogo 650-8670 (JP); FUKADA, Shintaro, Kobe-shi, Hyogo 650-8670 (JP); HARUNA, Shunsuke, Kobe-shi, Hyogo 650-8670 (JP)
(74) Representative: Müller-Boré & Partner Patentanwälte PartG mbB
(86) International application number: PCT/JP2021/033304
(87) International publication number: WO 2022/054905

(57) **Abstract**

A double-acting tool for friction stir spot welding is used to weld a first member and a second member each formed of a thermoplastic resin molding by friction stir spot welding. An overlapping part of the first member and the second member is formed, and the tool is disposed against the overlapping part while rotating a pin and a shoulder about a rotation axis. The shoulder is plunged into the overlapping part to start friction stir. The plunging is continued until the shoulder penetrates the first member, and penetrates the second member or reaches a depth corresponding to a first thickness t1 or lager. Subsequently, the overlapping part is backfilled with a resin material overflowed due to the plunging.

## Description

### Technical Field

The present disclosure relates to a friction stir spot welding method for welding an overlapping part of thermoplastic resin members by friction stir spot welding, and relates to a welded assembly acquired by using the method.

### Background Art

Thermoplastic resin members are used as constituent members of a structure, such as an aircraft, a railway vehicle, or an automobile, as well as metal members. Thermoplastic resin moldings mixed with fiber reinforcements are used for a structure which requires stiffness. Manufacturing the structure may require two members to be welded. As one of methods of the welding, friction stir spot welding is known. The friction stir spot welding includes: plunging a tool which is rotating into an overlapping part of the two members to be spot welded to perform friction stir; and forming a stirred weld for spot-welding the two members.

When the members to be spot welded are each made of metal material, such as aluminum, a plunging depth of the tool into the overlapping part is set around a welding surface between the members. For instance, when an upper member and a lower member each made of metal are welded by friction stir spot welding, a plunging depth of the tool to be plunged from the upper member is set to a welding surface between the upper member and the lower member, or to such a position slightly lower than the welding surface as to enter the lower member. Patent Literature 1 discloses a friction stir spot welding method of plunging a tool into a lower member by 1 mm or more for welding an aluminum plate having a surface protective layer to collect components of the surface protective layer onto the center of the stirred weld.

However, it is revealed that when the members to be welded by friction stir spot welding are each formed of a thermoplastic resin member, the aforementioned way of setting a plunging depth of the tool around the welding surface between the upper member and the lower member in the same manner as the welding of the metal members may fail to obtain sufficient welding strength. It is also revealed that insufficient welding strength between a stirred weld and a periphery therearound causes the insufficient welding strength.

### Citation List

### Patent Literature

Patent Literature 1: Japanese Patent Publication No. 6650801

### Summary of Invention

### Problem to be solved by the Invention

The present disclosure has an object of providing a friction stir spot welding method for welding an overlapping part of thermoplastic resin members by friction stir spot welding while achieving sufficiently ensured welding strength of the welding part, and providing a welded assembly acquired by using the method.

### Means for solving the problem

A friction stir spot welding method according to one aspect of this disclosure is a friction stir spot welding method for welding an overlapping part of a thermoplastic resin assembly including a first member and a second member by using a double-acting tool for friction stir spot welding including a pin and a shoulder having a hollow part into which the pin is inserted. The friction stir spot welding method includes: forming the overlapping part by arranging the first member having a first thickness in a position to which the tool is firstly plunged and the second member having a second thickness in a position to which the tool is lastly plunged; plunging one of the pin or the shoulder into the overlapping part and retracting the other of the pin or the shoulder to allow resin material overflowed by the plunging to be released, while rotating at least the plunged pin or the plunged shoulder around a rotation axis; continuing the plunging until the pin or the shoulder penetrates the first member, and penetrates the second member or reaches a depth corresponding to the first thickness or larger in the second member; and backfilling a region coming into existence by the plunging with the released resin material by retracting the one of the pin or the shoulder having performed the plunging and allowing the other having retracted to approach the overlapping part.

According to the friction stir spot welding method, a stirred weld formed by friction stir is in contact with the first member over the entire length (first thickness) thereof in a thickness direction, and is further in contact with the second member over the entire length (second thickness) thereof or a length corresponding to the first thickness or larger. Specifically, in the second member into which the tool is lastly plunged, a peripheral surface of the stirred weld in a columnar shape and the second member are welded in the thickness direction of the second member with a welding extent corresponding to the entire length of the second member in the thickness direction, or the first thickness or larger.

The disclosers have obtained the knowledge that a leading end region which is located in the stirred weld and stirred by a plunging leading end surface section of the tool has low welding strength when thermoplastic resin members are welded together by the friction stir spot welding. Besides, in the stirred weld, a stress concentrating part is likely to come into existence around a faying surface between the second member and the first member (or another intermediate member), and to be an origin of causing a fracture therefrom. The present disclosure can keep a boundary between the second member and the leading end region away from such an origin of a fracture, and weld the peripheral surface of the stirred weld, the first member, and the second member together. Consequently, the welding strength between the first member and the second member is improvable.

A welded assembly according to another aspect of the disclosure is a welded assembly including a first member and a second member each formed of a thermoplastic resin molding. The welded assembly includes: an overlapping part including the first member having a first thickness in one end in an overlapping direction and the second member having a second thickness in another end in the overlapping direction; a stirred weld located in the overlapping part to weld the first member and the second member by friction stir spot welding. The stirred weld penetrates the first member, and penetrates the second member or reaching a depth corresponding to the first thickness or larger in the second member.

According to the welded assembly, the stirred weld formed by the friction stir spot welding is in contact with the first member over the entire length (first thickness) thereof in a thickness direction, and is in contact with the second member over the entire length (second thickness) thereof or a length corresponding to the first thickness or larger. This archives a structure where a leading end region of the stirred weld which is likely to have low welding strength in a depth direction is kept away from a faying surface between the second member and the first member (or another intermediate member). Consequently, the welding strength between the first member and the second member is improvable.

### Effects of Invention

The present disclosure can provide a friction stir spot welding method for welding an overlapping part of thermoplastic resin members by friction stir spot welding while achieving sufficiently ensured welding strength, and provide a welded assembly acquired by using the method.

### Brief Description of Drawings

Fig. 1 is a schematic diagram illustrating a configuration of a double-acting friction stir spot welding device capable of performing a welding method according to the present disclosure.
Fig. 2 is a diagram illustrating a shoulder-preceding process of preliminarily plunging a shoulder into an overlapping part of welding members by using a double-acting tool for friction stir spot welding.
Fig. 3 is a diagram illustrating a pin-preceding process of preliminarily plunging a pin into the overlapping part of the welding members by using the tool above.
Fig. 4 is a sectional view for explaining welding strength between a stirred weld and a base material.
Fig. 5A is a sectional view of a welded assembly obtained by welding aluminum welding members by friction stir spot welding.
Fig. 5B is a sectional view of the welded assembly in Fig. 5A after a tensile test.
Fig. 6A is a sectional view of a welded assembly obtained by welding thermoplastic resin welding members at a plunging depth of the tool equivalent to a corresponding depth for the aluminum welding members.
Fig. 6B is a sectional view of the welded assembly in Fig. 6A after the tensile test.
Fig. 7 is a process flowchart of a friction stir spot welding method according to an embodiment of the present disclosure.
Fig. 8 is a diagram illustrating a configuration of a first member and a second member to be welded by friction stir spot welding, and a step of forming an overlapping part of the first member and the second member.
Fig. 9 is a sectional view illustrating a step of disposing the tool against the overlapping part.
Fig. 10 is a sectional view illustrating a first example of a step of plunging the shoulder into the overlapping part.
Fig. 11 is a sectional view illustrating a second example of the step of plunging the shoulder into the overlapping part.
Fig. 12 is a sectional view illustrating a third example of the step of plunging the shoulder into the overlapping part.
Fig. 13A is a sectional view illustrating a step of plunging the shoulder into an overlapping part including three layers of welding members.
Fig. 13B is a sectional view illustrating a step of plunging the shoulder into an overlapping part including three layers of welding members.
Fig. 14A is a sectional view of a welded assembly of a first member and a second member formed by the friction stir spot welding method of the embodiment.
Fig. 14B is a sectional view of a welded assembly of a first member and a second member formed by the friction stir spot welding method of the embodiment.
Fig. 15A is a sectional view of a welded assembly formed by a friction stir spot welding method of Comparative Example 1.
Fig. 15B is a sectional view of the welded assembly in Fig. 15A after a tensile test.
Fig. 16A is a sectional view of a welded assembly formed by a friction stir spot welding method of Comparative Example 2.
Fig. 16B is a sectional view of the welded assembly in Fig. 16A after a tensile test.
Fig. 17A is a sectional view of a welded assembly formed by a friction stir spot welding method of Example of this disclosure.
Fig. 17B is a sectional view of the welded assembly in Fig. 17A after a tensile test.
Fig. 18 is a graph showing welding strength of each of welded assemblies according to Comparative Examples 1 and 2, and Example.
Fig. 19A is a sectional view illustrating an example of a welded assembly including three layers of welding members, and a loading direction about the welded assembly.
Fig. 19B is a sectional view explaining a plunging depth of the tool for forming the welded assembly in Fig. 19A.
Fig. 20A is a sectional view illustrating another example of a welded assembly including three layers of welding members, and a loading direction about the welded assembly.
Fig. 20B is a sectional view for explaining a plunging depth of the tool for forming the welded assembly in Fig. 20A.

### Description of Embodiments

Hereinafter, an embodiment of the present disclosure will be described with reference to the accompanying drawings. A friction stir spot welding method according to the present disclosure is applicable to manufacturing of various welded assemblies obtainable by stacking two or more structural members each formed of a thermoplastic resin molding, such as plates, frames, exterior members, or columnar members. The resin molding may contain a fiber reinforcement material, such as a carbon fiber. The welded assembly manufactured serves as a component of a structure, such as an aircraft, a railway vehicle, or an automobile, for example.

### [Configuration of double-acting friction stir spot welding device]

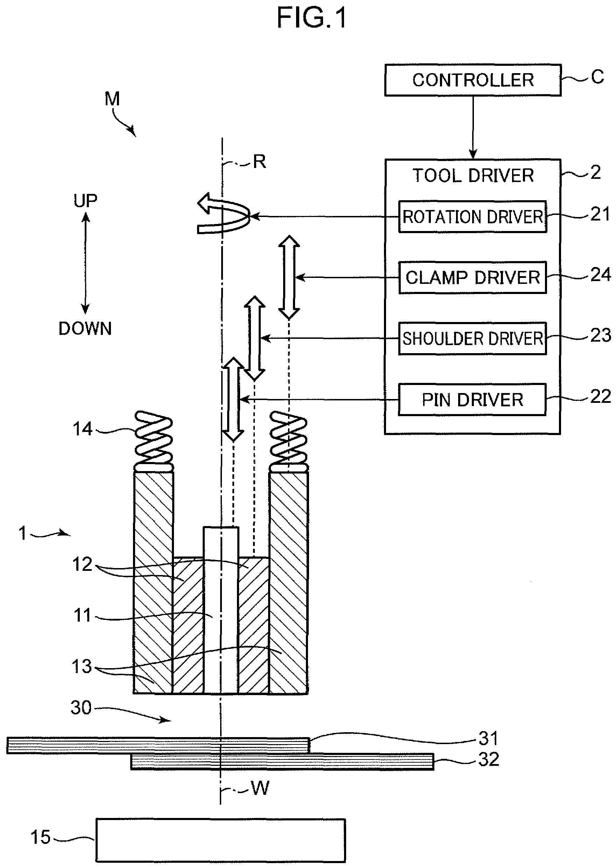

With reference to Fig. 1, there will be described first a configuration example of a double-acting friction stir spot welding device M capable of performing the friction stir spot welding method according to the present disclosure. The friction stir spot welding device M includes a double-acting tool 1 for friction stir spot welding, a tool driver 2 that rotates, and raises and lowers the tool 1, and a controller C that controls operation of the tool driver 2. Although Fig. 1 indicates directions "up" and "down", the directions are for convenience of description and are not intended to limit an actual direction of the tool 1 in use.

The tool 1 is supported by a tool fixing part. The tool fixing part can be a distal end part of an articulated robot, for example. A backup 15 is disposed facing a lower end surface of the tool 1. Between the tool 1 and the backup 15, at least two fiber-reinforced thermoplastic resin moldings to be welded are disposed. Fig. 1 illustrates an example in which an overlapping part 30 is disposed between the tool 1 and the backup 15, the overlapping part 30 including a first member 31 made of a flat plate and a second member 32 also made of a flat plate, partially overlapping each other in a vertical direction. The overlapping part 30 may further include one or more thermoplastic resin moldings between the first member 31 and the second member 32.

The tool 1 includes a pin 11, a shoulder 12, a clamp 13, and a spring 14. The pin 11 is formed in a columnar shape, and is disposed with its axis extending in the vertical direction. The pin 11 is rotatable about the axis as a rotation axis R, and is movable up and down, or can advance and retract, in the vertical direction along the rotation axis R. When the tool 1 is used, the rotation axis R and a spot welding position W in the overlapping part 30 are aligned.

The shoulder 12 includes a hollow part into which the pin 11 is inserted, and is a member formed in a cylindrical shape. The shoulder 12 has an axis that is coaxial with the axis of the pin 11, serving as the rotation axis R. The shoulder 12 rotates about the rotation axis R and moves up and down, or advances and retracts, in the vertical direction along the rotation axis R. Both the shoulder 12 and the pin 11 inserted into the hollow part relatively move in a direction of the rotation axis R while rotating about the rotation axis R. That is, the pin 11 and the shoulder 12 not only simultaneously move up and down along the rotation axis R, but also independently move such that one moves down and the other moves up.

The clamp 13 includes a hollow part into which the shoulder 12 is inserted, and is a member formed in a cylindrical shape. The clamp 13 has an axis that is also coaxial with the rotation axis R. The clamp 13 does not rotate about the axis, but moves up and down, or advances and retracts, in the vertical direction along the rotation axis R. The clamp 13 serves to surround an outer periphery of the pin 11 or the shoulder 12 when the pin or the shoulder performs friction stir. The clamp 13 surrounding the outer periphery enables a friction stir spot welding part to be finished smoothly without scattering friction stir materials.

The spring 14 is attached to an upper end of the clamp 13 to press the clamp 13 downward in a direction toward the overlapping part 30. The clamp 13 is attached to the tool fixing part with the spring 14 interposed therebetween. The backup 15 includes a flat surface that comes into contact with a lower surface of the overlapping part 30 of a weld target. The backup 15 is a backing member that supports the overlapping part 30 when the pin 11 or the shoulder 12 is plunged into the overlapping part 30. The clamp 13 pressed by the spring 14 presses the overlapping part 30 against the backup 15.

The tool driver 2 includes a rotation driver 21, a pin driver 22, a shoulder driver 23, and a clamp driver 24. The rotation driver 21 includes a motor, a driving gear, and the like, and rotatably drives the pin 11 and the shoulder 12 about the rotation axis R. The pin driver 22 is a mechanism that causes the pin 11 to advance and retract, or to move up and down along the rotation axis R. The pin driver 22 drives the pin 11 so that the pin 11 is plunged into the overlapping part 30 and retracted from the overlapping part 30. The shoulder driver 23 is a mechanism that causes the shoulder 12 to advance and retract along the rotation axis R, and to be plunged into and retracted from the overlapping part 30 of the shoulder 12. The clamp driver 24 is a mechanism that causes the clamp 13 to advance and retract along the rotation axis R. The clamp driver 24 moves the clamp 13 toward the overlapping part 30 and presses the overlapping part 30 against the backup 15. At this time, a pressing force of the spring 14 acts.

The controller C includes a microcomputer or the like, and controls operation of each part of the tool driver 2 by executing a predetermined control program. Specifically, the controller C controls the rotation driver 21 to cause the pin 11 and the shoulder 12 to perform a required rotation operation. The controller C also controls the pin driver 22, the shoulder driver 23, and the clamp driver 24 to cause the pin 11, the shoulder 12, and the clamp 13, respectively, to perform required advancing and retracting operation.

### [Method for using double-acting tool]

Next, a general method for using a double-acting tool for friction stir spot welding such as the tool 1 exemplified in the present embodiment will be described. The method for using the tool roughly includes a pin-preceding process of preliminarily plunging the pin 11 of the tool 1 into an overlapping part of a welding assembly and a shoulder-preceding process of preliminarily plunging the shoulder 12 into the overlapping part of the welding assembly. The embodiment of the present disclosure described later adopts the shoulder-preceding process. As a matter of course, the pin-preceding process is adoptable in this disclosure.

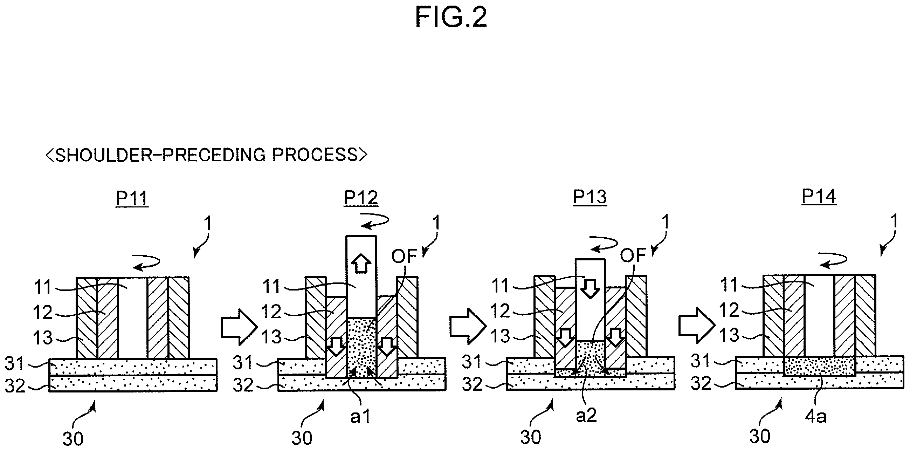

Fig. 2 is a diagram illustrating processes P11 to P14 of a friction stir spot welding method by the shoulder-preceding process. Fig. 2 briefly illustrates a process in which friction stir spot welding is performed on the overlapping part 30 having two layers of the first member 31 and the second member 32. The process P11 illustrates a preheating step of the overlapping part 30. The pin 11 and the shoulder 12 are rotated about the axis at a predetermined rotation speed while the tool 1 is in contact at its lower end with a surface of the first member 31.

The process P12 illustrates a plunging step of the shoulder 12. As indicated by a white arrow in Fig. 2, the shoulder 12 is lowered to be plunged into the overlapping part 30, while the pin 11 is raised, or retracted. This operation stirs a material in a plunging region of the shoulder 12. As indicated by an arrow a1, an overflow material OF overflowed from the overlapping part 30 by the plunging is released to a hollow space in the shoulder 12 coming into existence by the retraction of the pin 11.

The process P13 illustrates a backfill step of the overflow material OF. The backfill step causes the shoulder 12 to be raised and retracted while causing the pin 11 to be lowered. When the pin 11 is lowered, the plunging region of the shoulder 12 in the overlapping part 30 is backfilled with the overflow material OF released to the hollow space of the shoulder 12 as indicated by an arrow a2.

The process P14 illustrates a leveling step. The pin 11 and the clamp 13 are rotated to smooth a spot welding part while having respective lower end surfaces returned to a height position of the surface of the first member 31. The above processes form a stirred weld 4a in which the first member 31 and the second member 32 are spot-welded in the overlapping part 30.

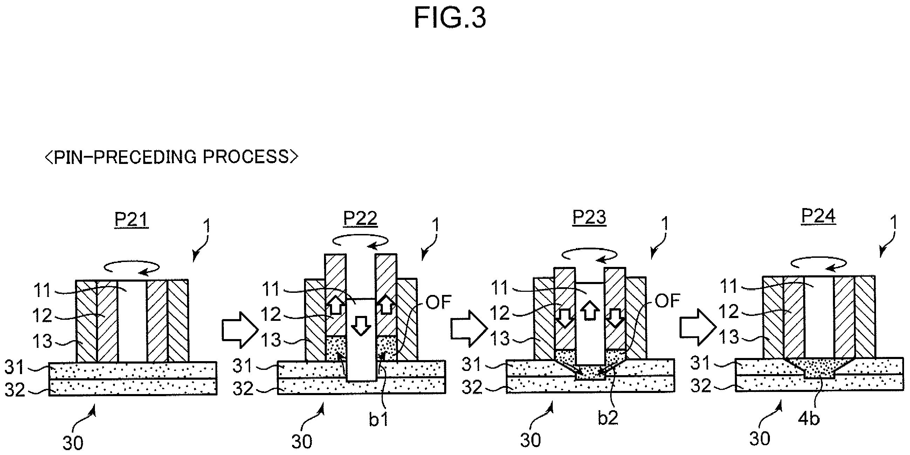

Fig. 3 is a diagram illustrating processes P21 to P24 of a friction stir spot welding method by the pin-preceding process. The process P21 is a preheating step of the overlapping part 30 as with the process P11 described above. The process P22 illustrates a plunging step of the pin 11. The plunging step causes the pin 11 to be lowered to be plunged into the overlapping part 30 while causing the shoulder 12 to be raised, or retracted. This operation stirs a material in a plunging region of the pin 11. As indicated by an arrow b1, an overflow material OF overflowed from the overlapping part 30 by the plunging is released to an annular region between the pin 11 and the clamp 13 coming into existence by the retraction of the shoulder 12.

The process P23 illustrates a backfill step of the overflow material OF. The backfill step causes the pin 11 to be raised and retracted while causing the shoulder 12 to be lowered. When the shoulder 12 is lowered, the plunging region of the pin 11 is backfilled with the overflow material OF released to the annular region as indicated by an arrow b2. The process P24 illustrates a leveling step as with the process P14 described above. The above processes form a stirred weld 4b.

### [Drawbacks in welding resin molding by friction stir spot welding]

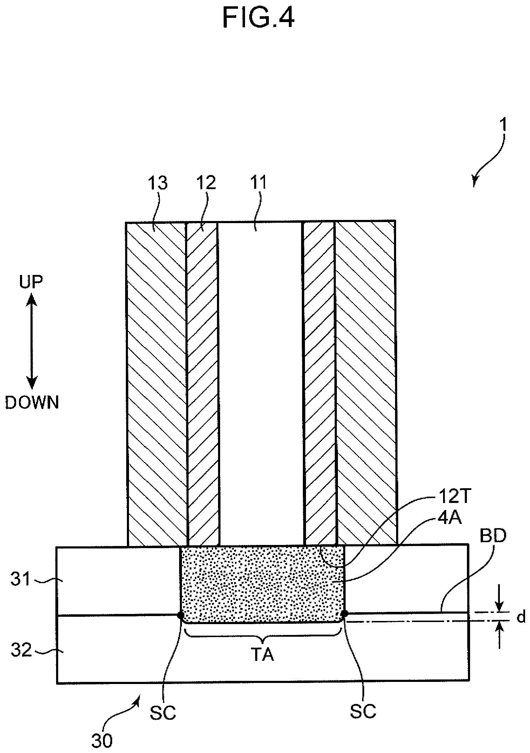

The friction stir spot welding is widely used in welding metal members like aluminum alloys together. When targets to be welded are metal members, a plunging depth of the tool 1 into an overlapping part 30 of the members is set to be relatively small. Fig. 4 is a sectional view of a stirred weld 4A formed generally by friction stir spot welding in use of aluminum alloys for the first member 31 and the second member 32. Fig. 4 exemplifies a stirred weld 4A formed, by the shoulder-preceding process illustrated in Fig. 2, in the overlapping part 30 having two layers of: the first member 31 serving as an upper member facing the tool 1; and the second member 32 serving as a lower member.

In welding of the metal members together, a position at which a lower end 12T of the shoulder 12 advances into the overlapping part 30 is set to a position (plunging depth d = 0 into the second member 32) on a faying surface BD between the first member 31 and the second member 32, or to such a position lower than the faying surface BD as to slightly enter the lower second member 32. Fig. 4 illustrates the stirred weld 4A having entered the second member 32 by a plunging depth d from the faying surface BD serving as a reference position. For instance, it is confirmed, in welding of the first member 31 made of a 2000-series aluminum alloy and having a thickness of 1.6 mm and the second member 32 made of a 2000-series aluminum alloy and having a thickness of 3.0 mm by friction stir spot welding, that high welding strength is attained under the condition of the plunging depth d = 0.6 mm.

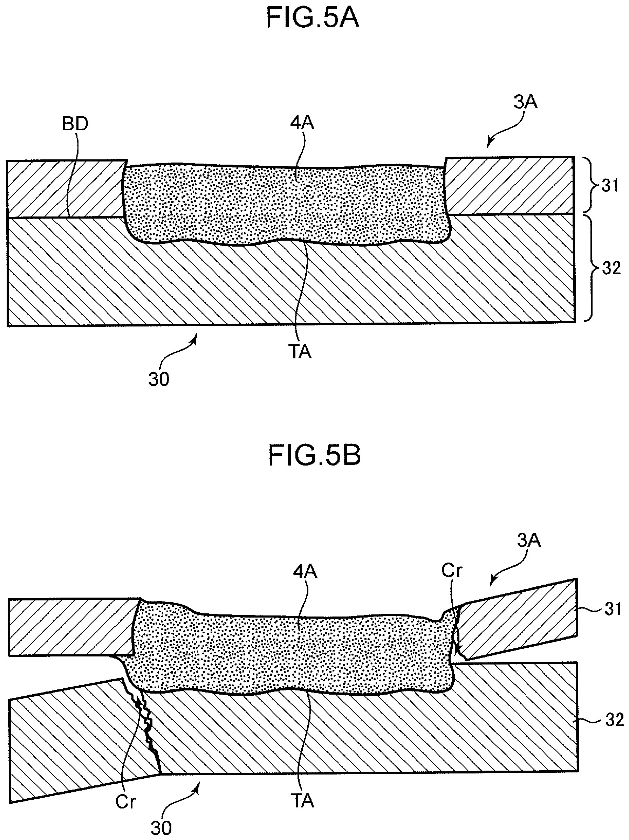

Fig. 5A is a sectional view of a welded assembly 3A obtained by welding the first member 31 and the second member 32 each made of the aluminum alloy exemplified above by the friction stir spot welding. The stirred weld 4A penetrates the first member 31 and enters an upper portion of the second member 32 a little. The stirred weld 4A has a bottom part serving as a leading end region TA which the lower end 12T of the shoulder 12 being a plunging leading end surface section of the tool 1 reaches. The stirred weld 4A and the second member 32 are welded exclusively in the leading end region TA.

Fig. 5B is a sectional view of the welded assembly 3A after a tensile-shear test. In the test, a tensile force is applied to separate the first member 31 and the second member 32 forming the welded assembly 3A from each other in an overlapping direction. As illustrated in Fig. 5B, two cracks Cr having caused a fracture of the welded assembly 3A respectively extend in the first member 31 and the second member 32 in each thickness direction thereof. It is seen from this perspective that the tensile force causes a nugget pullout in the welded assembly 3A. The leading end region TA and the second member 32 remain welded to each other.

When a tensile load is applied to the welded assembly 3A, a stress concentrating part SC comes into existence at a position illustrated in Fig. 4. The stress concentrating part SC comes into existence around an intersection of: the faying surface BD defined by a lower surface of the first member 31 and an upper surface of the second member 32; and a peripheral surface of the stirred weld 4A. It is clearly understood that each crack Cr illustrated in Fig. 5B extends from the corresponding stress concentrating part SC. To put it the other way round, it is seen from occurrence of such a crack Cr that the leading end region TA of the stirred weld 4Ais firmly welded to the second member 32.

The present disclosers have tried to apply the knowledge about the plunging depth of the tool 1 in the friction stir spot welding for the metal members to friction stir spot welding for thermoplastic resin moldings. However, the disclosers failed to prepare a welded assembly of resin moldings having sufficient welding strength.

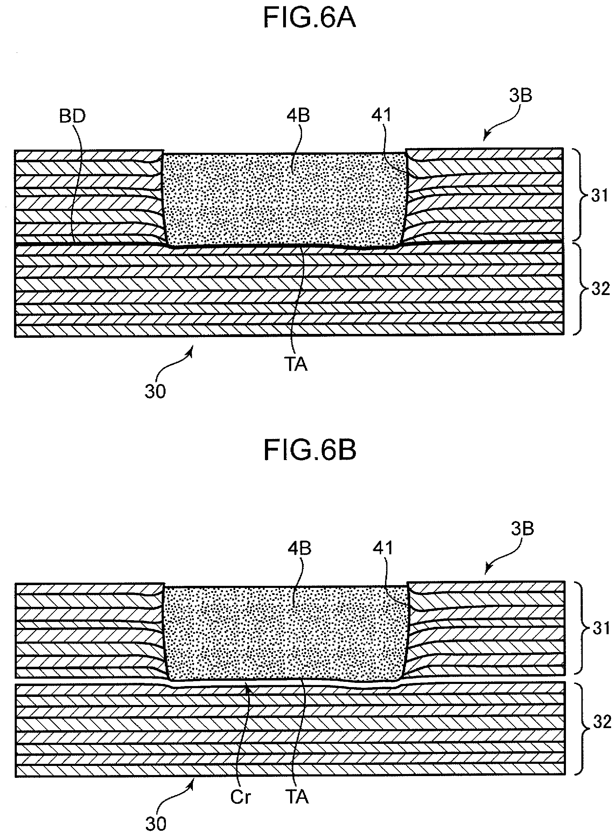

Fig. 6A is a sectional view of a welded assembly 3B obtained by welding a first member 31 and a second member 32 each formed of a thermoplastic resin member by friction stir spot welding. Fig. 6A illustrates the welded assembly 3B including the first member 31 and the second member 32 each formed of a laminate of thermoplastic resin sheets containing reinforcing fibers. A stirred weld 4B is formed by causing the shoulder 12 to penetrate the first member 31 and lowering the shoulder to enter the second member 32 by around 0.6 mm in the same manner as in the case of metal members. A peripheral surface 41 of the stirred weld 4B and the first member 31 are welded, and the leading end region TA and the second member 32 are welded to form the welded assembly 3B.

Fig. 6B is a sectional view of the welded assembly 3B after a tensile-shear test. In the test, a tensile force is applied to separate the first member 31 and the second member 32 forming the welded assembly 3B from each other in an overlapping direction. A crack Cr having caused a fracture of the welded assembly 3B occurs on the boundary between the leading end region TA and the second member 32. Specifically, not the nugget pullout as shown in Fig. 5B but a boundary fracture that the second member 32 peels off the leading end region TA occurs in the welded assembly 3B. In other words, the welding strength around the leading end region TA is low, and thus, it is said that the crack Cr extends from the stress concentrating part SC not in the thickness direction but in a direction along the boundary. It is seen from this perspective that setting a plunging depth of the tool 1 in friction stir spot welding for thermoplastic resin members by following the setting for the metal members results in low welding strength around the leading end region TA. The same applies to even a welded assembly 3B formed of thermoplastic resin members containing no reinforcing fibers.

Reasons for the low welding strength around the leading end region TA described above are deduced as follows. Generally, a metal material, such as aluminum, has higher thermal conductivity than that of a resin material. When the tool 1 is plunged into an overlapping part 30 of a metal assembly while being rotated, the temperature of a region friction-stirred by the tool 1 rises, and further the temperature of the base material around the region rises. In the welded assembly 3A illustrated in Fig. 5A, the temperature of a peripheral region adjacent to the leading end region TA of the second member 32 also rises in addition to the temperature of the stirred weld 4A. After the friction stir, the stirred weld 4A and the peripheral region are uniformly cooled. Therefore, a thermal stress remaining on the boundary between the stirred weld 4A (leading end region TA) and the second member 32 is small. This can be said to increase the welding strength of the welded assembly 3A.

By contrast, an overlapping part 30 of a resin assembly has lower thermal conductivity, and therefore has a larger temperature gradient between a friction stir region and a base material in a peripheral region therearound than the overlapping part of the metal assembly. In the welded assembly 3B exemplified in Fig. 6A, the temperature of the base material part of the second member 32 located around the leading end region TA of the stirred weld 4B is unlikely to rise to reach the same level as the level in the stirred weld 4B. Hence, a relatively large temperature gradient occurs between the leading end region TA of the stirred weld 4B and the base material in the peripheral region therearound. Therefore, the leading end region and the base material are not uniformly cooled, and a thermal shrinkage difference occurs therebetween. The thermal shrinkage difference leads to generation of a large thermal stress. A crack Cr having occurred on the boundary between the leading end region TA and the second member 32 as shown in Fig. 6B is deduced to progress with the thermal stress.

In consideration of the result of the studies described above, the disclosers have obtained the knowledge that it is effective, as a way of improving the welding strength of the overlapping part 30 of the thermoplastic resin assembly, to keep the stress concentrating part SC being an origin of causing the fracture of the welded assembly 3B away from the boundary between the second member 32 and the leading end region TA as far as possible. Hereinafter, a specific example of a friction stir spot welding method according to an embodiment of this disclosure for thermoplastic resin moldings to be welded will be described on the basis of the aforementioned knowledge.

### [Friction stir spot welding method according to embodiment]

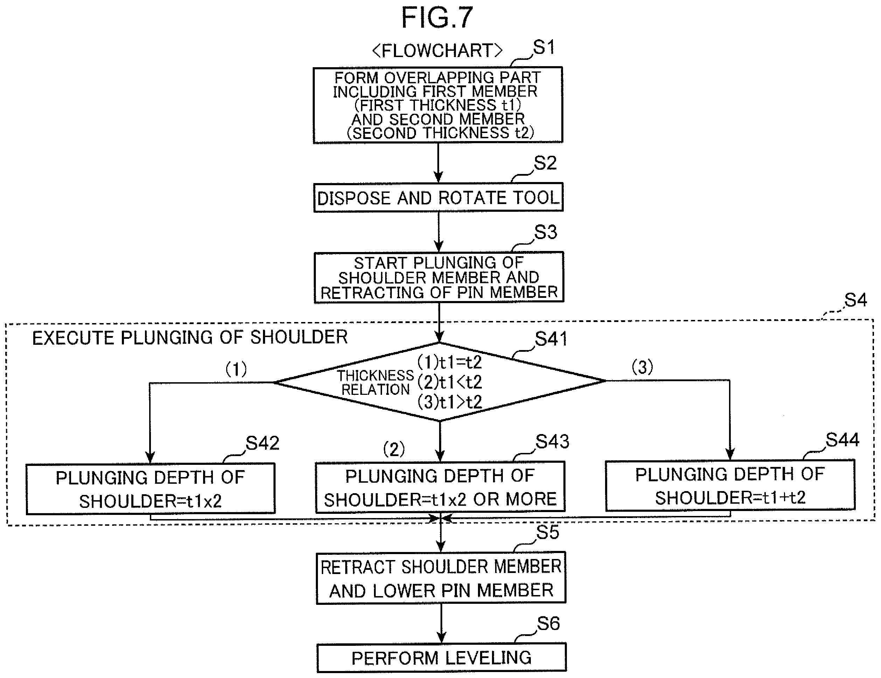

Fig. 7 is a process flowchart of a friction stir spot welding method according to an embodiment of the present disclosure. The friction stir spot welding method according to the embodiment is used to weld an overlapping part 30 including a first member 31 and a second member 32 each formed of a thermoplastic resin molding, the method including the following steps S1 to S5.
- Step S1: An overlapping part 30 including the first member 31 and the second member 32 is formed.
- Step S2: A tool 1 is disposed and rotated at a spot welding position W of the overlapping part 30.
- Step S3: A shoulder 12 is plunged into the overlapping part 30.
- Step S4: The shoulder 12 is plunged by a predetermined plunging depth to execute friction stir.
- Step S5: A pin 11 is lowered to perform backfilling with a material.
- Step S6: A friction stirred part is leveled.

Step S2 corresponds to the "preheating step" of the process P11 illustrated in Fig. 2, step S3 and step S4 correspond to the "plunging step" of the process P12, step S5 corresponds to the "backfill step" of the process P13, and step S6 corresponds to the "leveling step" of the process P14. However, in the stage of execution of the plunging in step S4 in the embodiment, the plunging depth of the tool 1 into the overlapping part 30 of the thermoplastic resin moldings to be welded is defined to differ from the plunging depth for the conventional welding of the metal members. Hereinafter, the respective steps will be described in detail.

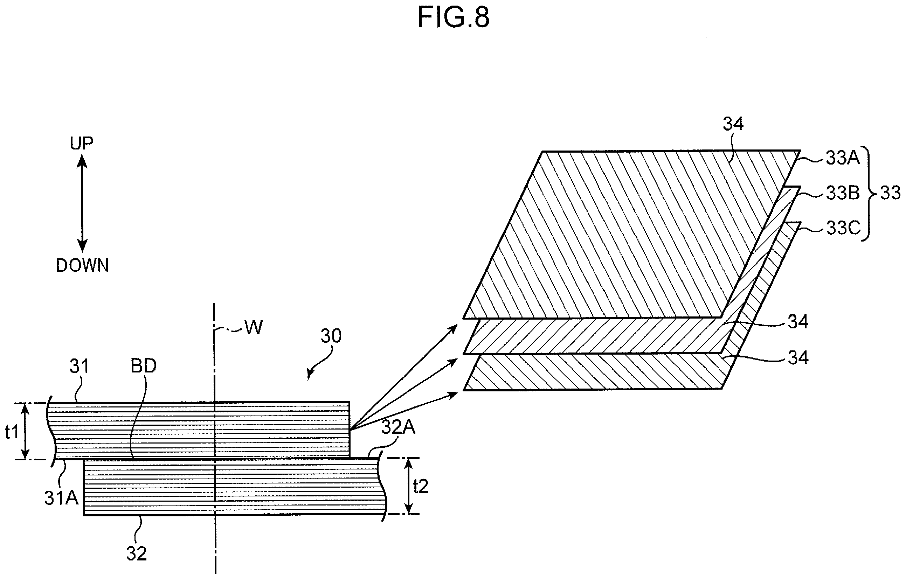

Fig. 8 is a diagram illustrating formation of the overlapping part 30 in step S1. Step S1 is executed to dispose the first member 31 and the second member 32 so that the overlapping part 30 is formed in which the first member 31 and the second member 32 overlap each other while being at least partially in contact with each other. The present embodiment exemplifies the overlapping part 30 in which a part of the first member 31 in a plate shape serving as an upper member and a part of the second member 32 in a plate shape serving as a second member are vertically overlapped with each other. The first member 31 has a predetermined first thickness t1 in an overlapping direction. The second member 32 has a second thickness t2 which is the same as the first thickness t1 (t1 = t2). In the embodiment, the tool 1 is arranged on the upper side of the overlapping part 30. Specifically, the overlapping part 30 is formed by arranging the first member 31 in a position to which the tool 1 is firstly plunged and the second member 32 in a position to which the tool 1 is lastly plunged.

The overlapping part 30 has a faying surface BD where a welding surface 31A that is a lower surface of the first member 31 and a welding surface 32A that is an upper surface of the second member 32 are in direct contact with each other. The two-layered overlapping part 30 allows the tool 1 to weld the first member 31 and the second member 32 at a predetermined spot welding position W by friction stir spot welding. The overlapping part 30 may include a plate and a frame (or a columnar member) overlapping each other, or include frames overlapping each other.

As described above, a thermoplastic resin molding is adopted for each of the first member 31 and the second member 32. Examples of the thermoplastic resin include polypropylene (PP), polyethylene (PE), polyamide (PA), polystyrene (PS), polyaryletherketone (PAEK), polyacetal (POM), polycarbonate (PC), polyethylene terephthalate (PET), polyetheretherketone (PEEK), polyphenylene sulfide (PPS), an ABS resin, and a thermoplastic epoxy resin.

Each of the first member 31 and the second member 32 may be a molding solely made of the thermoplastic resin, or may be a fiber-reinforced thermoplastic resin molding. Examples of the latter molding include a molding obtained by mixing short fibers or long fibers as the fiber reinforcements with a thermoplastic resin, a fiber array body in which continuous fibers are arrayed in a predetermined direction, and a molding obtained by impregnating a woven fabric of continuous fibers with a thermoplastic resin. The present embodiment shows an example of the first member 31 and the second member 32 each of which uses a molding formed by stacking prepregs, which are each a sheet in which an array of continuous fibers is impregnated with a thermoplastic resin, in multiple layers.

Fig. 8 illustrates a part of a sheet laminate 33 configuring the first member 31. The sheet laminate 33 includes a first sheet layer 33A, a second sheet layer 33B, and a third sheet layer 33C each formed of a sheet in which an array of continuous fibers is impregnated with a thermoplastic resin. The first sheet layer 33A is a sheet having a thickness of about 0.1 mm to 0.5 mm, in which many continuous fibers 34 are arrayed in a predetermined array direction, and the array is impregnated with a thermoplastic resin and integrated. The second sheet layer 33B and the third sheet layer 33C are each a sheet similar to the above, but are different from each other in array direction of the continuous fibers 34. As described above, when three sheets different from one another in three-axial direction of the array of the continuous fibers 34 are stacked in multiple layers, for example, the first member 31 has pseudo isotropy. The second member 32 is also a plate formed of a multilayer laminate of sheets similar to the first member 31.

Available examples of the continuous fibers 34 include carbon fibers, glass fibers, ceramic fibers, metal fibers, and organic fibers. Although Fig. 8 exemplifies the sheet in which the continuous fibers 34 are arrayed in one direction, a fabric type sheet may be used in which a woven fabric is formed using continuous fibers as the warp and the weft and then impregnated with a thermoplastic resin. Instead of the continuous fibers 34, a sheet or a plate in which long fibers having a length of about 2 mm to 20 mm, or short fibers are mixed with a thermoplastic resin can also be used.

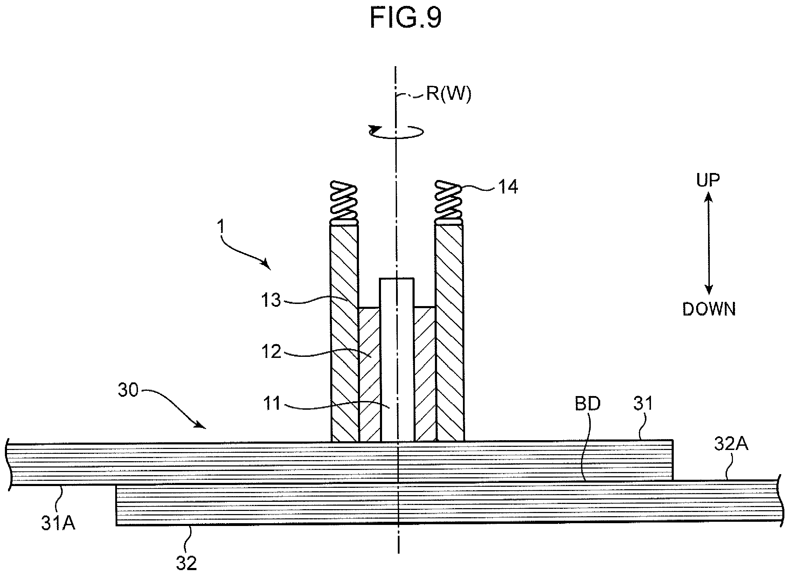

Fig. 9 is a sectional view illustrating disposing of a tool in step S2. In step S2, the tool 1 is disposed against the overlapping part 30 such that the rotation axis R of the tool 1 is along an overlapping direction of the first member 31 and the second member 32, or the vertical direction. At this time, the lower end surface of the tool 1 is brought into contact with an upper surface of the first member 31 while the rotation axis R is aligned with the predetermined spot welding position W. The clamp 13 presses the overlapping part 30 against the backup 15 with the pressing force of the spring 14. After completion of positioning, the rotation driver 21 illustrated in Fig. 1 rotates the pin 11 and the shoulder 12 about the rotation axis R. This rotation preheats the overlapping part 30 in a region where the pin 11 and the shoulder 12 are in contact with each other.

Fig. 9 further illustrates a start of the plunging of the pin 11 in step S3. In the embodiment, the "shoulder-preceding process" illustrated in Fig. 2 is adopted, and therefore, the shoulder 12 is started to be plunged into the overlapping part 30 while at least the shoulder 12 is rotated about the axis. Then, the pin 11 is retracted from the overlapping part 30 to allow the resin material overflowed by the plunging to be released. In this way, friction stir is started at the spot welding position W. Alternatively, when the "pin-preceding process" illustrated in Fig. 3 is adopted, the pin 11 is started to be plunged into the overlapping part 30 while at least the pin 11 is rotated about the axis. Then, the shoulder 12 is retracted from the overlapping part 30 to allow the resin material overflowed by the plunging to be released.

In subsequent step S4, the plunging of the shoulder 12 into the overlapping part 30 is actually executed. In the embodiment, the overlapping part 30 is formed to have two layers of the first member 31 serving as the upper member and the second member 32 serving as the lower member. The shoulder 12 is plunged from the upper surface of the first member 31. A plunging depth (lowered amount) of the shoulder 12 is set in accordance with a relation between the first thickness t1 of the first member 31 and the second thickness t2 of the second member 32.

The plunging in step S4 is continued until the shoulder 12 penetrates the first member 31, and penetrates the second member 32 or reaches a depth corresponding to the first thickness t1 or larger in the second member 32. Specifically, as shown in Fig. 7, it is determined whether the relation between the first thickness t1 and the second thickness t2 meets any one of the following Cases (1) to (3) (step S41), and the plunging depth of the shoulder 12 is set in accordance with each Case. Alternatively, in adoption of the "pin-preceding process" illustrated in Fig. 3, the plunging in step S4 is continued until the pin 11 penetrates the first member 31, and penetrates the second member 32 or reaches a depth corresponding to the first thickness t1 or larger in the second member 32.
- Case (1): the first thickness t1 = the second thickness t2
- Case (2): the first thickness t1 < the second thickness t2
- Case (3): the first thickness t1 > the second thickness t2

In Case (1), that is, when the first thickness t1 and the second thickness t2 are the same, the plunging depth of the shoulder 12 into the overlapping part 30 is set to be twice as large as the first thickness t1 (t1 × 2) (step S42). In this case, the shoulder 12 penetrates both the first member 31 and the second member 32. In Case (2), that is, when the second thickness t2 is larger than the first thickness t1, the plunging depth of the shoulder 12 is set to be twice or more than twice as large as the first thickness t1 (step S43). In this case, the shoulder 12 penetrates the first member 31, and reaches at least a depth corresponding to the first thickness t1 in the second member 32. Here, a settable largest plunging depth indicates t1 + t2. In Case (3), that is, when the second thickness t2 is smaller than the first thickness t1, the plunging depth of the shoulder 12 is set to a sum of the first thickness t1 and the second thickness t2 (t1 + t2) (step S44). In this case, the shoulder 12 penetrates both the first member 31 and the second member 32.

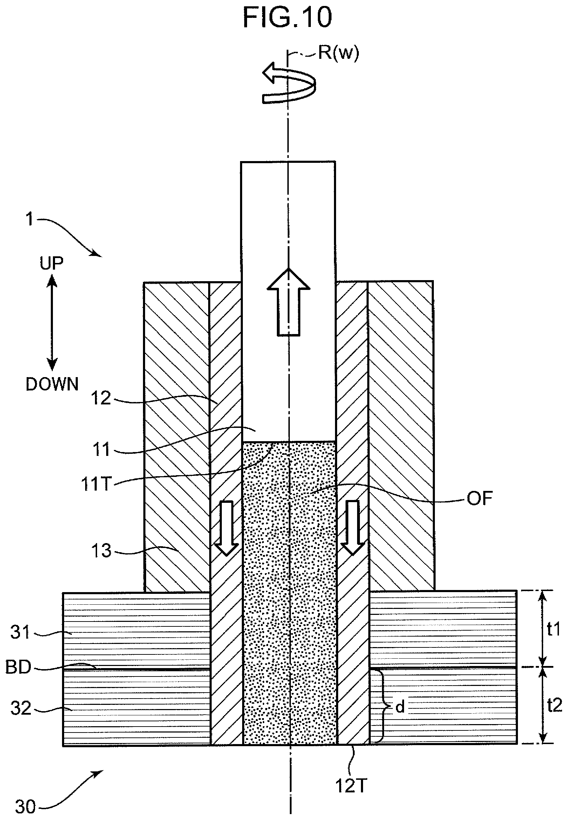

Fig. 8 and Fig. 9 exemplify Case (1). Fig. 10 is a sectional view illustrating the plunging of the shoulder 12 in step S42 in Case (1). In step S42, the shoulder driver 23 lowers the shoulder 12 along the rotation axis R to plunge the shoulder 12 into the overlapping part 30. Then, the pin driver 22 raises the pin 11 to retract the pin 11 from the overlapping part 30 in the rotation axis R direction. The clamp 13 is immovable. When the shoulder 12 rotating is plunged into the overlapping part 30, the overlapping part 30 is friction-stirred in the plunging region of the shoulder 12 to soften a resin molding material in the region. As a matter of course, the continuous fibers 34 included in the plunging region are also pulverized.

When the pin 11 is retracted, a retraction space comes into existence in the hollow part of the shoulder 12. In other words, when a lower end 11T of the pin 11 is raised against a lower end 12T of the shoulder 12, a cavity comes into existence in the inside of the shoulder 12. The overflow material OF, which is the resin molding material overflowed from the overlapping part 30 due to the plunging of the shoulder 12, is released to the hollow part of the shoulder 12.

As described above, the plunging depth of the shoulder 12 into the overlapping part 30 is expressed by the first thickness t1 × 2. Here, t1 = t2, and thus, the plunging depth of the shoulder 12 into the lower second member 32 into which the tool is lastly plunged is expressed by d = t1 = t2. Accordingly, the shoulder driver 23 continues the plunging of the shoulder 12 until the lower end 12T of the shoulder 12 penetrates the first member 31, and further reaches a lower surface of the second member 32 or penetrates the second member 32. This plunging depth d is intended for forming a stirred weld 4 having a thickness equivalent to the first thickness t1 of the first member 31 in the second member 32 in the overlapping part 30.

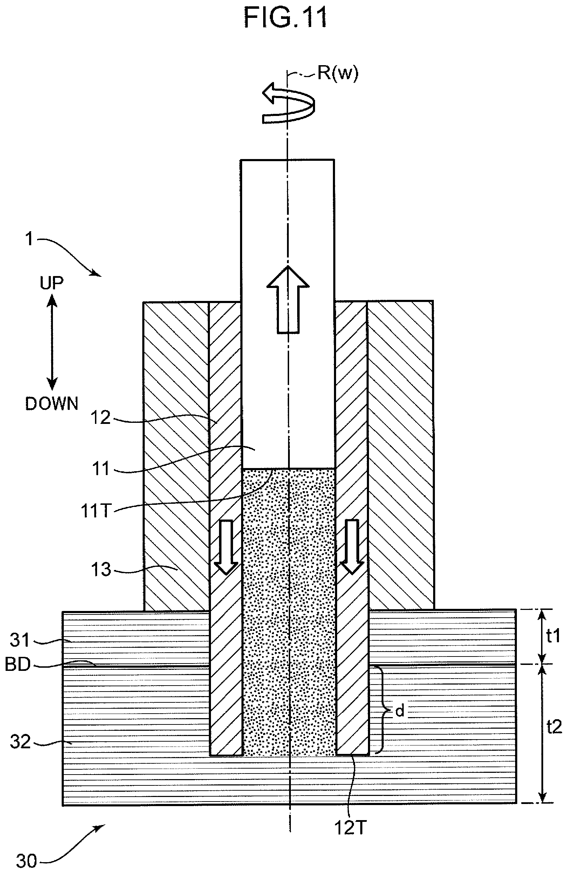

Fig. 11 is a sectional view illustrating the plunging of the shoulder 12 in step S43 (t1 < t2) in Case (2). Operations of lowering the shoulder 12 by the shoulder driver 23 and raising the pin 11 by the pin driver 22 are the same as those in step S42. However, in step S43, the plunging depth of the shoulder 12 into the overlapping part 30 is set to be twice or more than twice as large as the first thickness t1. Specifically, the shoulder driver 23 continues the plunging of the shoulder 12 so that the plunging depth d of the shoulder 12 into the second member 32 falls within a range of t2 ≥ d ≥ t1. This plunging depth d is intended for forming a stirred weld 4 having a thickness at least equivalent to or larger than the first thickness t1 of the first member 31 in the second member 32 in the overlapping part 30.

When the plunging depth d is selected within the range of t2 > d ≥ t1 in step S43, the lower end 12T of the shoulder 12 does not penetrate the second member 32. However, the shoulder 12 friction-stirs the second member 32 only by a depth corresponding to the first thickness t1 or larger. By contrast, under the setting of the plunging depth d = t2, the lower end 12T of the shoulder 12 penetrates the second member 32.

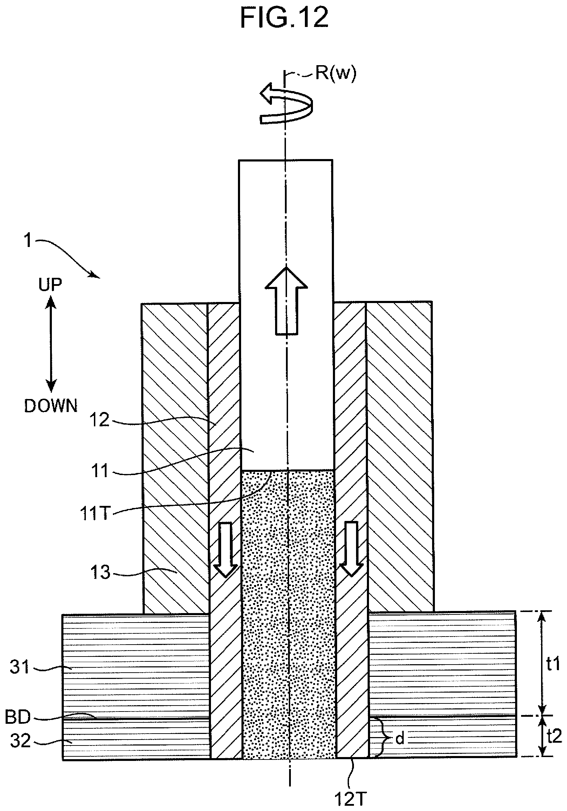

Fig. 12 is a sectional view illustrating the plunging of the shoulder 12 in step S44 (t1 > t2) in Case (3). In step S44, the plunging depth of the shoulder 12 into the overlapping part 30 is set to a sum of the first thickness t1 and the second thickness t2. That is to say, the plunging depth of the shoulder 12 into the second member 32 is expressed by d = t2. Accordingly, the shoulder driver 23 continues the plunging of the shoulder 12 until the lower end 12T of the shoulder 12 penetrates the first member 31 and further penetrates the second member 32. This plunging depth d is intended for forming a stirred weld 4 having a thickness corresponding to an entire thickness of the second member 32 in the second member 32 in the overlapping part 30.

Although described above are the examples where the overlapping part 30 has two layers of welding members, i.e., the first member 31 and the second member 32, the present disclosure is applicable to friction stir spot welding for an overlapping part 30 including three or more layers of welding members. Specifically, the overlapping part 30 may include one or more thermoplastic resin members between the first member 31 and the second member 32. The way of setting the plunging depth d of the tool 1 (shoulder 12 in Example) as shown in Cases (1) to (3) can be employed even for the overlapping part 30 having this configuration.

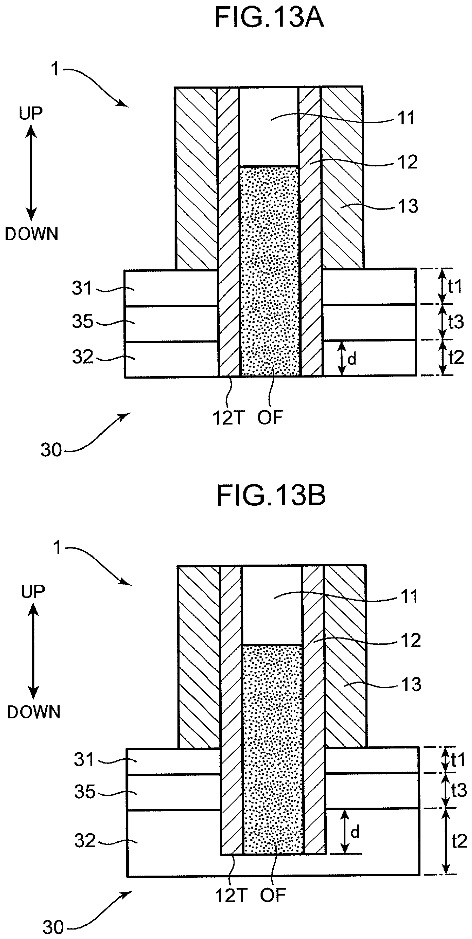

Each of Fig. 13A and Fig. 13B is a sectional view illustrating a step of plunging the shoulder 12 into an overlapping part 30 including three layers of welding members. The overlapping part 30 exemplified here includes a first member 31, a second member 32, and a third member 35 made of thermoplastic resin and interposed between the two members, the three members being stacked in the vertical direction. In the overlapping part 30, the first member 31 is arranged in a position to which the tool 1 is firstly plunged and the second member 32 is arranged in a position to which the tool 1 is lastly plunged. Each example shown in Fig. 13A and Fig. 13B supposes a case where no load is applied to the third member 35.

Fig. 13A illustrates an example where a first thickness t1 of the first member 31 and a second thickness t2 of the second member 32 are equal to each other (t1 = t2). In other words, the example meets Case (1). The example shows that the third member 35 has a thickness t3 equivalent to t1. The thickness t3 of the third member 35 does not particularly have an influence on a plunging depth of the tool 1 into the second member 32. In this example, the plunging depth of the shoulder 12 into the overlapping part 30 is expressed by t1 + t2 + t3. That is to say, the plunging depth d of the shoulder 12 into the second member 32 equals to t1. Here, t1 = t2, and thus, the plunging depth d is said to be equal to t2. Accordingly, the plunging of the shoulder 12 is performed until the lower end 12T of the shoulder 12 penetrates the first member 31 and the third member 35, and further penetrates the second member 32.

Fig. 13B illustrates an example where the second thickness t2 of the second member 32 is larger than the first thickness t1 of the first member 31 (t1 < t2). In other words, the example meets Case (2). In the example, the third member 35 has a thickness t3 falling between t1 and t2. The thickness t3 of the third member 35 does not particularly have an influence on a plunging depth of the tool 1 into the second member 32. In the example, the plunging depth of the shoulder 12 into the overlapping part 30 is set to a value (t1 × 2 + t3) obtained by doubling the first thickness t1 and adding the third thickness t3 of the third member 35 thereto, or larger. That is to say, the plunging depth d of the shoulder 12 into the second member 32 is expressed by d ≥ t1. Accordingly, the plunging of the shoulder 12 is performed until the lower end 12T of the shoulder 12 penetrates at least the first member 31 and the third member 35, and further reaches a depth corresponding to t1 in the second member 32.

Heretofore, described are examples of plunging of the tool 1 where no load is applied to the third member 35. By contrast, when a load is applied to the third member 35, the first member 31 or the second member 32, and the third member 35 are defined as an integrated single member in accordance with a load direction of the load, and a plunging manner of the tool 1 is set. Specifically, at least one of the first member 31 or the second member 32 can be defined to include plates having the same load direction in which a load is applied and stacked in the plunging direction of the tool 1.

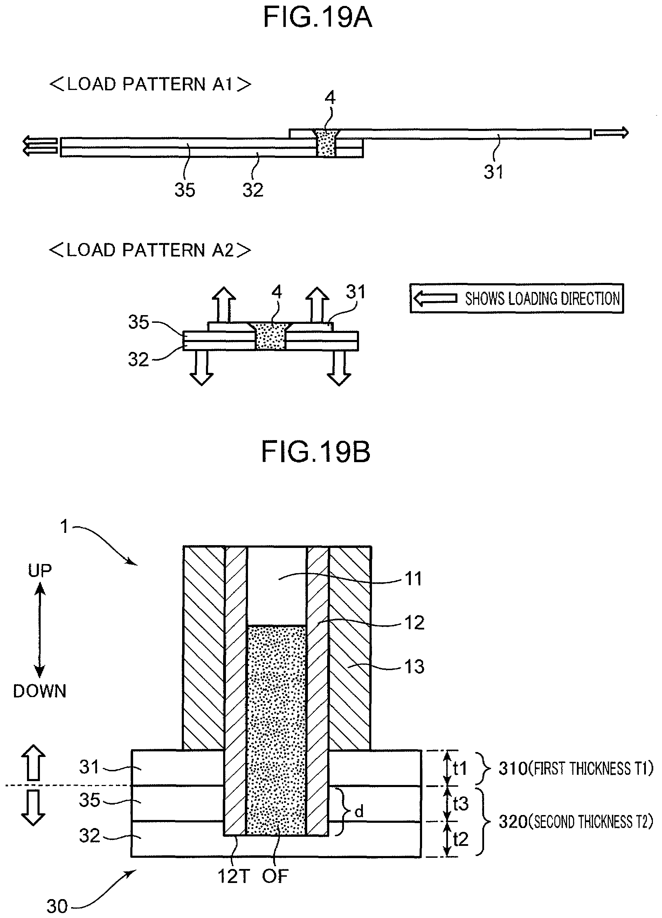

Fig. 19A illustrates a welded assembly including three layers of the first member 31, the second member 32, and the third member 35 welded in a stirred weld 4, the third member 35 allowing a load to be applied thereto in the same direction as the load direction of the second member 32. Load pattern A1 shows an example where a rightward load is applied to the first member 31, and a leftward load is applied to each of the second member 32 and the third member 35. Load pattern A2 shows an example where an upward load is applied to the first member 31, and a downward load is applied to each of the second member 32 and the third member 35.

Fig. 19B is a sectional view explaining a plunging depth of the tool for forming the stirred weld 4 of the welded assembly in Fig. 19A. In the case of each load direction shown in Fig. 19A, the second member 32 and the third member 35 having the same loading directions are definable as a single member. Specifically, a faying surface between the members having different load directions from each other is set to a boundary, and an upper member is defined as a "first member 310" and a lower member is defined as a "second member 320". Then, a plunging depth d of the tool 1 is set. In this example, the boundary serves as a faying surface between the first member 31 and the third member 35, and the first member 31 directly serves as the "first member 310", and a laminate of the second member 32 and the third member 35 serves as the "second member 320". The "first member 310" has a first thickness T1 = t1, and the "second member 320" has a second thickness T2 = t2 + t3. In this case, the plunging depth d into the "second member 320" may fall within a range of T2 ≥ d ≥ T1 in the same manner as in the example of Case (2) shown in Fig. 11. That is to say, in this case, it is unnecessary to ensure the plunging depth equal to or larger than t1 in the second member 32.

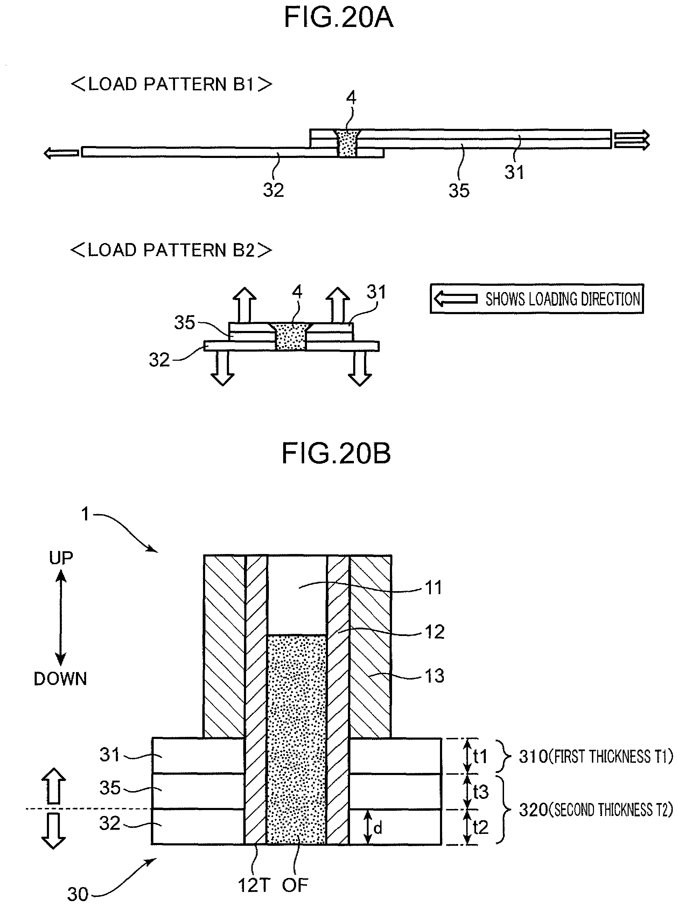

Fig. 20A illustrates a welded assembly including three layers of the first member 31, the second member 32, and the third member 35 welded in a stirred weld 4, the third member 35 allowing a load to be applied thereto in the same direction as the load direction of the first member 31. Load pattern B1 shows an example where a leftward load is applied to the second member 32, and a rightward load is applied to each of the first member 31 and the third member 35. Load pattern B2 shows an example where an upward load is applied to each of the first member 31 and the third member 35, and a downward load is applied to the second member 32.

Fig. 20B is a sectional view explaining a plunging depth of the tool for forming the stirred weld 4 of the welded assembly in Fig. 20A. In the case of each load direction shown in Fig. 20A, the first member 31 and the third member 35 having the same loading directions are definable as a single member. In this example, the boundary in the load direction serves as a faying surface between the third member 35 and the second member 32, and a laminate of the first member 31 and the third member 35 serves as the "first member 310", and the second member 32 directly serves as the "second member 320". The "first member 310" has a first thickness T1 = t1 + t3, and the "second member 320" has a second thickness T2 = t2. In this case, the plunging depth d into the "second member 320" is expressed by d = T2 in the same manner as in the example of Case (3) shown in Fig. 12. It is seen from these perspectives that the stirred weld 4 penetrating the overlapping part 30 owing to the plunging by d = T2 is formed in the case of T1 > T2 corresponding to Case (3) or the case of T1 = T2 corresponding to Case (1). In the case of T1 < T2 corresponding to Case (2), the plunging depth d is settable to be equivalent to the first thickness T1 of the "first member 310", i.e., d = T1.

Referring back to Fig. 7, step S5 of backfilling of the overflow material OF overflowed due to the plunging is executed after completion of step S4 of plunging of the shoulder 12 described above. In step S5, the shoulder driver 23 raises or retracts the shoulder 12 with the lower end 12T penetrating the second member 32 as shown in Fig. 10 along the rotation axis R. Then, the pin driver 22 lowers the pin 11 to approach the overlapping part 30. Finally, the shoulder 12 is raised until the lower end 12T reaches the upper surface of the first member 31, and the pin 11 is lowered until the lower end 11T reaches the upper surface of the first member 31. In this manner, the plunging region of the shoulder 12 is backfilled with the resin material or the overflow material OF having been released to the hollow part of the shoulder 12.

Thereafter, the aforementioned leveling step of step S6 is performed. The leveling step is performed to smooth a friction-stirred part while allowing the lower end 11T of the pin 11 to be flush with the lower end 12T of the shoulder 12. The overflow material OF backfilling the plunging region of the shoulder 12 is cooled and solidified to form the stirred weld 4 in which the first member 31 and the second member 32 are welded.

### [Structure of welded assembly]

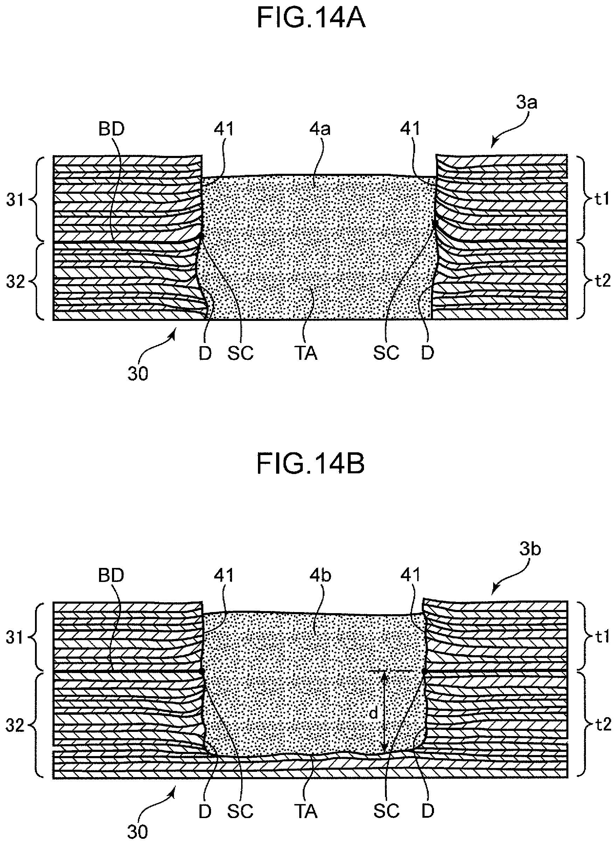

Fig. 14A is a sectional view illustrating a welded assembly 3a of a first member 31 and a second member 32 formed by the friction stir spot welding method of the embodiment. The welded assembly 3a includes: an overlapping part 30 including the first member 31 in one end and the second member 32 in another end in an overlapping direction or a vertical direction; and a stirred weld 4a located in the overlapping part 30. In the overlapping part 30, the first member 31 and the second member 32 partly overlap each other while being in contact with each other on a faying surface BD. The stirred weld 4a indicates a specific part where the first member 31 and the second member 32 are welded by the friction stir spot welding.

Fig. 14A exemplifies the welded assembly 3a obtained concerning Case (1) shown in Fig. 10 where the first thickness t1 of the first member 31 and the second thickness t2 of the second member 32 are equal to each other (t1 = t2). The stirred weld 4a has a substantially columnar shape since the weld fills the plunging region of the tool 1 in a columnar shape. The stirred weld 4a includes a leading end region TA corresponding to an arrival position of the lower end 12T of the shoulder 12, and a peripheral surface 41 being a boundary with a base material part of the first member 31 and the second member 32, the base material part being located in the overlapping part 30 and being not stirred.

The stirred weld 4a penetrates the first member 31 and penetrates the second member 32. That is to say, the leading end region TA reaches a lower surface of the second member 32. Besides, the peripheral surface 41 is welded to the first member 31 over the first thickness t1 being the entire length thereof in the thickness direction, and is welded to the second member 32 over the second thickness t2 being the entire length thereof, except a recess part leveled on the top. Specifically, unlike the comparative example shown in Fig. 6A, the stirred weld includes, in the second member 32 into which the tool 1 is finally plunged, a vertical welded section D where the peripheral surface 41 of the stirred weld 4a and the second member 32 are welded in the thickness direction of the second member 32 with a welding extent over the entirety length of the second member 32 in the thickness direction.

As described above, when welding members each made of thermoplastic resin are welded by friction stir spot welding, the leading end region TA has low welding strength. Besides, the stirred weld 4a may have a stress concentrating part SC which is likely to come into existence around an intersection of the faying surface BD between the first member 31 and the second member 32; and the peripheral surface 41, and to be an origin causing a fracture of the welded assembly 3a therefrom. The welded assembly 3a according to the embodiment can have a structure in which the leading end region TA which is likely to have low welding strength is kept away from the stress concentrating part SC on the faying surface BD. Besides, the vertical welded section D where the peripheral surface 41 of the stirred weld 4a and the second member 32 are welded extends with a length corresponding to the second thickness t2 between the stress concentrating part SC and the leading end region TA. The stirred weld 4a thus attains welding of the first member 31 and the second member 32 at high welding strength. In addition, a welded assembly obtained concerning Case (3) shown in Fig. 12 is also the same as the welded assembly shown in Fig. 14A.

Fig. 14B exemplifies a welded assembly 3b obtained concerning Case (2) shown in Fig. 11 where the second thickness t2 of the second member 32 is larger than the first thickness t1 of the first member 31 (t1 < t2). The welded assembly 3b also includes a stirred weld 4b including a leading end region TA and a peripheral surface 41. However, unlike the welded assembly 3a, the leading end region TA of the welded assembly 3b does not reach the lower surface of the second member 32, but enters the second member 32 by a depth corresponding to a plunging depth d from a faying surface BD. The plunging depth d is larger than the first thickness t1 (d > t1).

The stirred weld 4b in Fig. 14B has a portion where the leading end region TA is in contact with the second member 32. The portion is likely to have low welding strength. However, the leading end region TA is at a position away from a stress concentrating part SC by the plunging depth d which is larger than the first thickness t1, and a vertical welded section D having a length corresponding to the plunging depth d is located between the region and the stress concentrating part. The stirred weld 4b thus attains welding of the first member 31 and the second member 32 at high welding strength.

As described earlier, the plunging depth d may be the same as the first thickness t1 (d = tl), or may be the same as the second thickness t2 (d = t2). In the latter case, the leading end region TA reaches such a position as to penetrate the second member 32. However, in the relation of t1 < t2, the leading end region TA is sufficiently kept away from the stress concentrating part SC as long as the relation of d ≥ t1 is satisfied. In this respect, the stirred weld 4b can have high welding strength without necessarily penetrating the second member 32.

In a configuration of the welded assembly 3 including three or more layers of plates, the welded assembly results in including one or more intermediate plates each formed of a thermoplastic resin member between a first member 31 in a topmost layer and a second member 32 in a lowermost layer. In the case where the intermediate plate represents the third member 35 supposed to receive no load as exemplified in Fig. 13A and Fig. 13AB, the third member 35 is regarded as a layer independent of the first member 31 and the second member 32, and irrelevant to the setting of the plunging depth d. By contrast, in the case where the intermediate plate represents the third member 35 supposed to receive a load applied in the same direction as the first member 31 or the second member 32 as exemplified in Fig. 19A to Fig. 20B, the third member is regarded as a layer to be relevant to the setting of the plunging depth d or relevant to the state of the stirred weld 4. In this case, the welded assembly 3 results in having a structure in which the third member 35 is regarded as the first member 31 or the second member 32 depending on its loading direction, and at least one of the first member 31 or the second member 32 include plates. In the examples shown in Fig. 19A to Fig. 20B, the welded assembly 3 results in having a structure in which a laminate of the two members, i.e., the first member 31 and the third member 35, stacked in the plunging direction of the tool 1 is defined as the "first member 310", or a laminate of the two members, i.e., the third member 35 and the second member 32, stacked in the plunging direction is defined as the "second member 320".

### [Tensile-shear test for welded assembly]

For comparison concerning welding strength, a welded assembly (Example) obtained by using the friction stir spot welding method according to the present disclosure and welded assemblies (Comparative Examples 1 and 2) obtained without using the method were prepared, and each welded assembly was subjected to a tensile-shear test. As the first member 31 and the second member 32 serving as welding materials in Example, and Comparative Examples 1 and 2, a quasi-isotropic laminate type continuous fiber CFRTP (Carbon Fiber Reinforced Thermoplastics) material having a thickness of 3.3 mm was used. The overlapping part 30 of each welded assembly was formed to have a two-layered structure including the first member 31 arranged in a position to which the tool 1 was firstly plunged and the second member 32 arranged in a position to which the tool 1 was lastly plunged. Friction stir of the overlapping part 30 was performed in the shoulder-preceding process shown in Fig. 2.

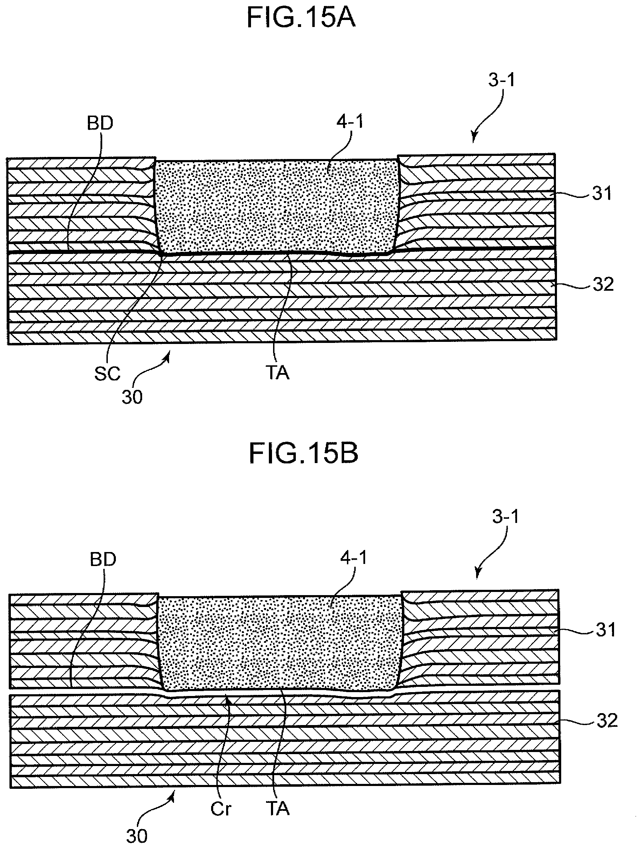

Fig. 15A is a sectional view illustrating a welded assembly 3-1 formed by a friction stir spot welding method of Comparative Example 1. In Comparative Example 1, friction stir was performed under the setting of the plunging depth of the shoulder 12 into the overlapping part 30 of the welded assembly 3-1 to 3.7 mm. Specifically, the plunging depth of the shoulder 12 into the second member 32 serving as the lower member was set as d = 0.4 mm. A stirred weld 4-1 obtained by the friction stir resulted in including a leading end region TA at a position around 0.4 mm deep away from a faying surface BD into the second member 32. In other words, the leading end region TA was only slightly away from a stress concentrating part SC. Fig. 15B is a sectional view of the welded assembly 3-1 in Comparative Example 1 after the tensile-shear test. A crack Cr occurred on a boundary surface between the leading end region TA and the second member 32.

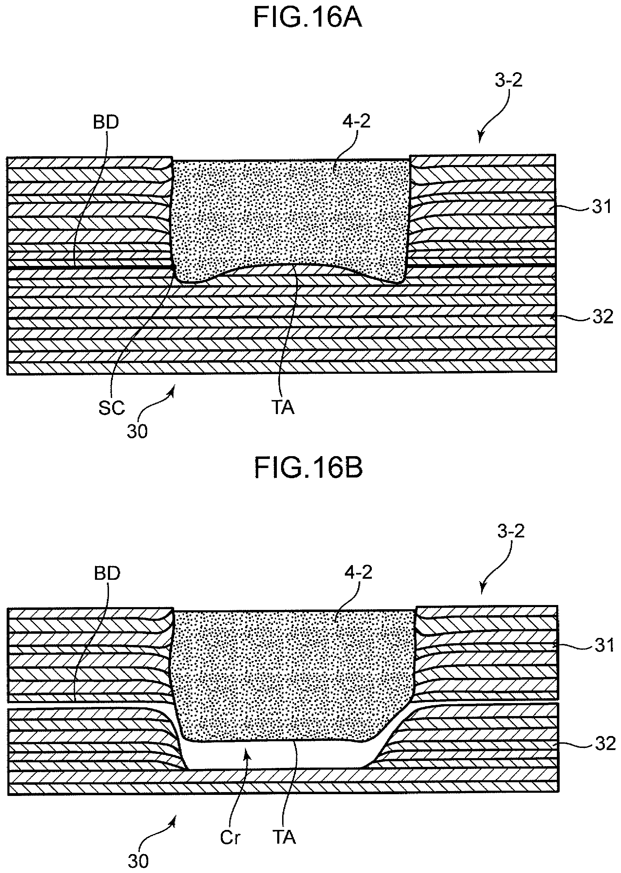

Fig. 16A is a sectional view of a welded assembly 3-2 formed by a friction stir spot welding method of Comparative Example 2. In Comparative Example 2, friction stir was performed under the setting of the plunging depth of the shoulder 12 into the overlapping part 30 of the welded assembly 3-2 to 5.1 mm. That is to say, the plunging depth of the shoulder 12 into the second member 32 was set as d= 1.8mm. A stirred weld 4-2 obtained by the friction stir resulted in including a leading end region TA at a position around 1.8 mm deep away from a faying surface BD into the second member 32. In other words, the leading end region TA was away from a stress concentrating part SC only at a distance corresponding to a half thickness of the second member 32. Fig. 16B is a sectional view of a welded assembly 3-2 in Comparative Example 2 after the tensile-shear test. Like Comparative Example 1, a crack Cr occurred on a boundary surface between the leading end region TA and the second member 32 in Comparative Example 2 as well.

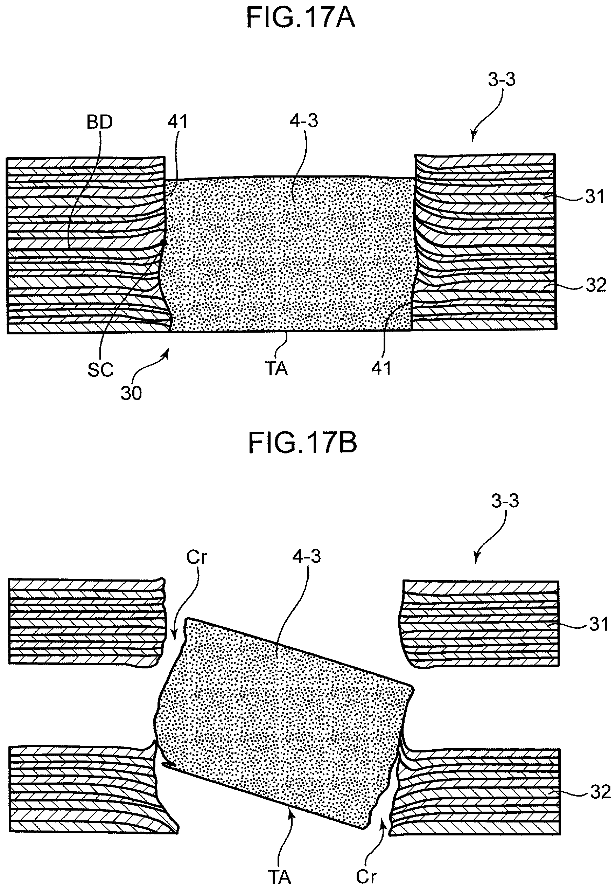

Fig. 17A is a sectional view of a welded assembly 3-3 formed by a friction stir spot welding method of Example. In Example, friction stir was performed under the setting of the plunging depth of the shoulder 12 into the overlapping part 30 of the welded assembly 3 to 6.6 mm. That is to say, the plunging depth of the shoulder 12 into the second member 32 was set as d = 3.3 mm at which the shoulder penetrated the second member 32. A stirred weld 4-3 obtained by the friction stir resulted in including a leading end region TA at a position corresponding to the lower surface of the second member 32. Specifically, the leading end region TA was away from a stress concentrating part SC by 3.3 mm corresponding to the thickness of the second member 32.

Fig. 17B is a sectional view of the welded assembly 3-3 in Example after the tensile-shear test. Unlike Comparative Examples 1 and 2, a crack Cr occurred on a boundary between a peripheral surface 41 of the stirred weld 4-3 and a base material part. Specifically, the welded assembly 3-3 was damaged not due to the boundary fracture shown in Comparative Examples 1 and 2 but due to a nugget pullout.

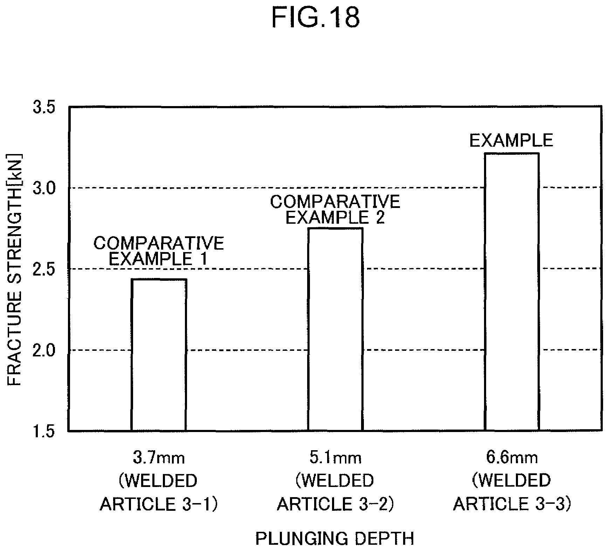

Fig. 18 is a graph showing welding strength of each of the welded assemblies 3-1, 3-2, 3-3 respectively according to Comparative Examples 1 and 2, and Example. The welding strength of the welded assemblies 3-1, 3-2, 3-3 confirmed by the tensile-shear test indicates 2.4 kN, 2.8kN, and 3.2kN respectively. It was confirmed from this perspective that the welding strength is higher as the plunging depth d of the shoulder 12 into the second member 32 is larger. Moreover, the welding strength of the welded assembly 3-3 in Example was confirmed to be improved by around 30 % in comparison with the welded assembly 3-1 in Comparative Example 1, and by around 15 % in comparison with the welded assembly in Comparative Example 2.

### [Effects]

The friction stir spot welding method according to the embodiment as described heretofore includes forming the stirred weld 4 to be in contact with the first member 31 over the first thickness t1 being the entire length thereof in the thickness direction, and further in contact with the second member 32 over the second thickness t2 being the entire length thereof in the thickness direction or a length corresponding to the first thickness t1 or larger. Specifically, in the second member 32 into which the tool 1 is lastly plunged, the peripheral surface 41 of the stirred weld 4 and the second member 32 are welded in the thickness direction of the second member with a welding extent corresponding to the entire length of the second member in the thickness direction, or the first thickness t1 or larger. The leading end region TA of the stirred weld 4 has low welding strength when thermoplastic resin members are welded together by the friction stir spot welding. Besides, the stirred weld 4 may have the stress concentrating part SC which is likely to come into existence around the faying surface BD between the first member 31 and the second member 32, and to be an origin causing a fracture therefrom. However, according to the embodiment, the leading end region TA can be sufficiently kept away from the stress concentrating part SC, and the peripheral surface 41 of the stirred weld 4 and the base material part can be welded together. Consequently, the welding strength between the first member 31 and the second member 32 is improvable.

In a case where the overlapping part 30 has two layers of the first member 31 and the second member 32, and the first thickness t1 and the second thickness t2 are the same, the plunging depth into the overlapping part 30 is settable to be twice as large as the first thickness t1. In this manner, the plunging is continued until the pin 11 or the shoulder 12 penetrates both the first member 31 and the second member 32. The stirred weld 4 formed by the friction stir includes the leading end region TA which reaches such a position as to penetrate the second member 32. Accordingly, the stress concentrating part SC and the leading end region TA can be kept away furthest from each other, and improvement of welding strength is attainable.

In a case where the overlapping part 30 has two layers of the first member 31 and the second member 32, and the second thickness t2 is larger than the first thickness t1, the plunging depth into the overlapping part 30 is settable to be twice or more than twice as large as the first thickness t1. In this manner, the plunging is continued until the pin 11 or the shoulder 12 penetrates the first member 31 and reaches at least a depth corresponding to the first thickness t1 or larger in the second member 32. The stirred weld 4 formed by the friction stir includes the leading end region TA which reaches at least a depth corresponding to the first thickness t1 in the second member 32. Accordingly, the stress concentrating part SC and the leading end region TA can be kept away from each other by at least the first thickness t1. This consequently allows a nugget pullout to occur more easily than a boundary fracture on a boundary between the leading end region TA and the second member 32, and thus the welding strength is improvable.

In a case where the overlapping part 30 has two layers of the first member 31 and the second member 32, and the second thickness t2 is smaller than the first thickness t1, the plunging depth into the overlapping part 30 is settable to a sum of the first thickness t1 and the second thickness t2. The plunging is continued until the pin 11 or the shoulder 12 penetrates both the first member 31 and the second member 32. The stirred weld 4 formed by the friction stir includes the leading end region TA which reaches such a position as to penetrate the second member 32. Accordingly, the stress concentrating part SC and the leading end region TA can be kept away furthest from each other, and improvement of welding strength is attainable.

The overlapping part 30 may include one or more thermoplastic resin members between the first member 31 and the second member 32. For instance, as shown in Fig. 13A, Fig. 13B, even the three-layered overlapping part 30 including the third member 35 is adoptable in the same manner as the two-layered overlapping part about the plunging depth d into the second member 32 into which tool 1 is lastly fitted. Specifically, even if a welded assembly is supposed to include an overlapping part 30 in which the third member 35 receives a load, it is the plunging depth d into the second member 32 that has the largest influence of a fracture on the welded assembly. Therefore, the continuous plunging of the tool 1 until the pin 11 or the shoulder 12 penetrates the first member 31, and penetrates the second member 32 or reaches at least a depth corresponding to the first thickness t1 or larger achieves preparation of a welded assembly 3 having high welding strength even in an overlapping part 30 including three or more layers.

The welded assembly 3 formed in the embodiment includes the stirred weld 4 formed by the friction stir spot welding to be in contact with the first member 31 over the first thickness t1 being the entire length thereof in the thickness direction, and further in contact with the second member over the second thickness t2 being the entire length thereof in the thickness direction, or the first thickness 1t or larger. This archives a structure where the leading end region TA of the stirred weld 4 which is likely to have low welding strength is kept away from the faying surface BD between the second member 32 and the first member 31 or another intermediate member like the third member 35. Consequently, the welding strength between the first member 31 and the second member 32 is improvable.

## Claims

1. A friction stir spot welding method for welding an overlapping part of a thermoplastic resin assembly including a first member and a second member by using a double-acting tool for friction stir spot welding including a pin and a shoulder having a hollow part into which the pin is inserted, the friction stir spot welding method comprising:
forming the overlapping part by arranging the first member having a first thickness in a position to which the tool is firstly plunged and the second member having a second thickness in a position to which the tool is lastly plunged;
plunging one of the pin or the shoulder into the overlapping part and retracting the other of the pin or the shoulder to allow resin material overflowed by the plunging to be released, while rotating at least the plunged pin or the plunged shoulder around a rotation axis;
continuing the plunging until the pin or the shoulder penetrates the first member, and penetrates the second member or reaches a depth corresponding to the first thickness or larger in the second member; and
backfilling a region coming into existence by the plunging with the released resin material by retracting the one of the pin or the shoulder having performed the plunging and allowing the other having retracted to approach the overlapping part.

2. The friction stir spot welding method according to claim 1, wherein, in a case where the overlapping part has two layers of the first member and the second member, and the first thickness and the second thickness are the same, the plunging is continued until the pin or the shoulder penetrates the first member and the second member by setting a depth of the plunging to be twice as large as the first thickness.

3. The friction stir spot welding method according to claim 1, wherein, in a case where the overlapping part has two layers of the first member and the second member, and the second thickness is larger than the first thickness, the plunging is continued until the pin or the shoulder penetrates the first member and reaches at least a depth corresponding to the first thickness or larger in the second member by setting a depth of the plunging to be twice or more than twice as large as the first thickness.

4. The friction stir spot welding method according to claim 1, wherein, in a case where the overlapping part has two layers of the first member and the second member, and the second thickness is smaller than the first thickness, the plunging is continued until the pin or the shoulder penetrates the first member and the second member by setting a depth of the plunging to a sum of the first thickness and the second thickness.

5. The friction stir spot welding method according to claim 1, wherein the overlapping part includes one or more thermoplastic resin members between the first member and the second member.

6. The friction stir spot welding method according to any one of claims 1 to 5, wherein at least one of the first member or the second member includes plates stacked in a plunging direction of the tool.

7. A welded assembly including a first member and a second member each formed of a thermoplastic resin molding, the welded assembly comprising:
an overlapping part including the first member having a first thickness in one end in an overlapping direction and the second member having a second thickness in another end in the overlapping direction; and
a stirred weld located in the overlapping part to weld the first member and the second member by friction stir spot welding, the stirred weld penetrating the first member, and penetrating the second member or reaching a depth corresponding to the first thickness or larger in the second member.

8. The welded assembly according to claim 7, wherein the overlapping part includes one or more thermoplastic resin members between the first member and the second member.

9. The welded assembly according to claim 7 or 8, wherein at least one of the first member or the second member includes plates stacked in the overlapping direction.
